# EUROPÄISCHE PATENTSCHRIFT

(11) **EP 1 458 803 B1**
(45) Veröffentlichungstag und Bekanntmachung des Hinweises auf die Patenterteilung: **27.04.2005**
(21) Anmeldenummer: 02798335.2
(22) Anmeldetag: 13.12.2002
(51) Int. Cl.: C08K 5/134, C08K 5/3435, C08K 5/1545, C08K 5/51, C08L 75/04

(54) **STABILISATORZUSAMMENSETZUNG II**
STABILISING COMPOSITION II
COMPOSITION STABILISATRICE II

(30) Priorität: 14.12.2001 DE 10161863
(43) Veröffentlichungstag der Anmeldung: 22.09.2004
(73) Patentinhaber: BASF AKTIENGESELLSCHAFT, 67056 Ludwigshafen (DE)
(72) Erfinder: HEIDENFELDER, Thomas, 67125 Dannstadt (DE); APPEL, Manfred, 67857 Dernbach (DE)
(74) Vertreter: Reitstötter, Kinzebach & Partner (GbR) Patentanwälte
(86) Internationale Anmeldenummer: PCT/EP2002/014236
(87) Internationale Veröffentlichungsnummer: WO 2003/051976

(56) Entgegenhaltungen:
- EP-A- 0 905 181
- EP-A- 0 934 972
- EP-A- 1 090 952
- US-A- 5 821 292

## Beschreibung

Die vorliegende Erfindung betrifft eine Stabilisatorzusammensetzung sowie deren Verwendung zur Stabilisierung von unbelebtem organischen Material gegen die Einwirkung von Licht, Sauerstoff und Wärme.

Die mechanischen, chemischen und/oder ästhetischen Eigenschaften von unbelebtem organischen Material, insbesondere Kunststoffen und Lacken, werden bekanntermaßen durch die Einwirkung von Licht, Sauerstoff und Wärme verschlechtert. Diese Verschlechterung zeigt sich üblicherweise als Vergilbung, Verfärbung, Rissbildung oder Versprödung des Materials. Mit Stabilisatoren oder Stabilisatorzusammensetzungen soll ein zufriedenstellender Schutz gegen die Beeinträchtigung von organischem Material durch Licht, Sauerstoff und Wärme erzielt werden.

Die EP 0 791 032 offenbart die Verwendung von bestimmten 3-Arylacrylsäureestern als Lichtschutzmittel und Stabilisatoren für unbelebtes organisches Material. Die 3-Arylacrylsäureester können in Kombination mit sterisch gehinderten Aminen oder sterisch gehinderten Phenolen verwendet werden.

Die EP 0 263 524 betrifft ein Stabilisatorgemisch aus Chromanderivaten, organischen Phosphiten oder Phosphoniten zur Stabilisierung von Kunststoffen, wobei das Stabilisatorgemisch gegebenenfalls noch weitere Stabilisatoren enthalten kann.

Die DE-A-4405670 betrifft ein Stabilisatorgemisch aus Chromanderivaten, organischen Phosphiten oder Phosphoniten und Aminen zur Stabilisierung von organischem Material.

Die DE 199 48 117 offenbart eine Stabilisatorzusammensetzung, die einen 3-Arylacrylsäureester, ein sterisch gehindertes Amin, ein Chromanderivat, ein organisches Phosphit und/oder Phosphonit enthält.

Unbefriedigend ist bei derartigen Stabilisatorenzusammensetzungen häufig die geringe Dauer der Schutzwirkung.

Der vorliegenden Erfindung liegt die Aufgabe zugrunde, eine Stabilisatorzusammensetzung anzugeben, die langandauernde Schutzwirkung auf hohem Niveau, insbesondere bezüglich des Glanzerhaltes, gegen die Einwirkung von Licht, Sauerstoff und Wärme bietet. Die Stabilisatorzusammensetzung soll besonders wirksam zur Stabilisierung von Polyurethanen sein.

Erfindungsgemäß wird diese Aufgabe durch eine Stabilisatorzusammensetzung gelöst, die umfasst
A) 35 bis 65 Gewichtsteile wenigstens eines 3-Arylacrylsäureesters der allgemeinen Formel I, 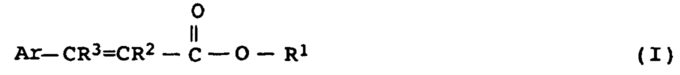 worin
   - Ar: für einen Arylrest steht, welcher zusätzlich 1, 2 oder 3 Substituenten, die unter C₁-C₄-Alkyl, C₁-C₄-Alkoxy, Hydroxy, Phenoxy, Amino, Mono- oder Di(C₁-C₄-alkyl)amino, Halogen oder Nitro ausgewählt sind, oder eine Methylendioxygruppe tragen kann,
   - R¹: für C₁-C₂₀-Alkyl, C₂-C₂₀-Alkenyl oder C₃-C₈-Cycloalkyl, das gegebenenfalls mit bis zu drei Resten ausgewählt unter Halogen, Cyano, Nitro, Amino, C₁-C₄-Alkylamino, C₁-C₄-Dialkylamino, Hydroxy, C₁-C₄-Alkyl und C₁-C₄-Alkoxy substituiert sein kann, steht,
   - R² und R³: für Wasserstoff oder C₁-C₄-Alkyl stehen,
B) 10 bis 50 Gewichtsteile wenigstens eines Amins der allgmeinen Formel II 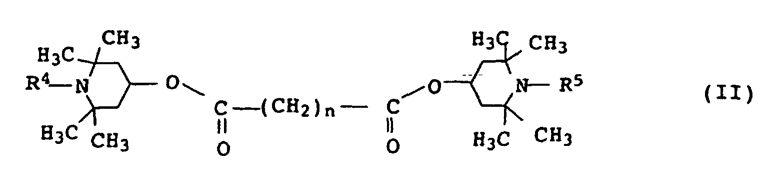 worin
   - R⁴ und R⁵: unabhängig voneinander für Wasserstoff, C₁-C₄-Alkyl, C₁-C₁₂-Alkoxy stehen und
   - n: für eine ganze Zahl von 2 bis 10 steht,
C) 5 bis 15 Gewichtsteile wenigstens eines Phenols der Formel III, 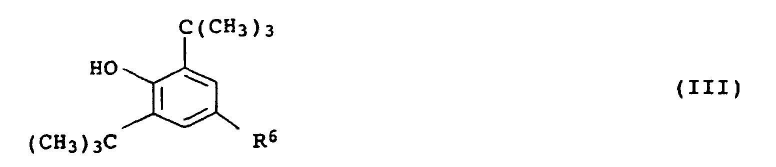 worin
   - R⁶: für C₁-C₂₀-Alkoxycarbonyl-C₁-C₆-alkyl steht,
D) 0,5 bis 2,5 Gewichtsteile wenigstens eines Chromanderivats der Formel IV, 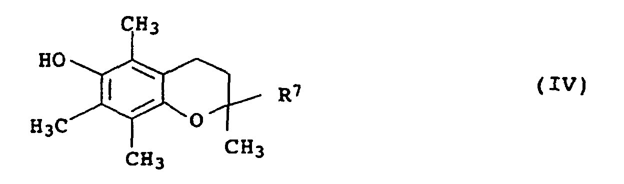 in der R⁷ für eine Gruppe der Formel 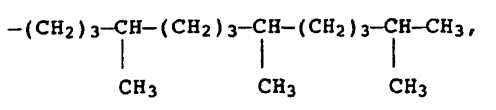 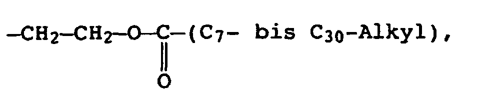 -CH₂CH₂-S-(C₁- bis C₃₀-Alkyl) oder 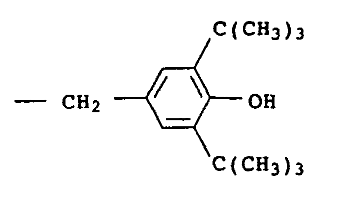 steht, und
E) 5 bis 25 Gewichtsteile wenigstens eines organischen Phosphits und/oder Phosphonits.

Die erfindungsgemäße Stabilisatorzusammensetzung liegt bei Raumtemperatur im Allgemeinen als viskose Flüssigkeit vor und kann daher leicht in das zu stabilisierende Material eingearbeitet und homogen verteilt werden.

Es wurde ferner gefunden, dass die Schutzwirkung der erfindungsgemäßen Stabilisatorzusammensetzung gegen die Einwirkung von Licht, Sauerstoff und Wärme höher ist, als nach den Beiträgen der Komponenten der Stabilisatorzusammensetzung zu erwarten ist. Die ausgeprägte Schutzwirkung der erfindungsgemäßen Stabilisatorzusammensetzung beruht demnach auf einem synergistischen Effekt der Komponenten.

Die erfindungsgemäße Stabilisatorzusammensetzung umfasst als Komponente A) einen 3-Arylacrylsäureester der allgemeinen Formel I.

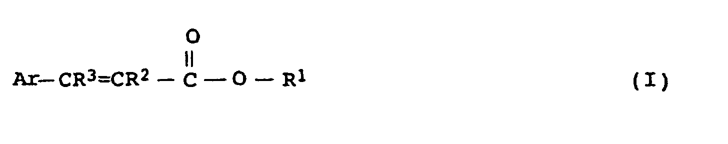

In der Formel I steht Ar z. B. für
Phenyl,
o-, m- oder p-Tolyl,
o-, m- oder p-Ethylphenyl,
o-, m- oder p-Propylphenyl,
m- oder p-Cumyl,
o-, m- oder p-Butylphenyl,
m- oder p-iso-Butylphenyl,
m- oder p-sec-Butylphenyl,
m- oder p-tert-Butylphenyl,
2,3-, 2,4-, 2,5-, 2,6-, 3,4- oder 3,5-Dimethylphenyl, Mesityl,
o-, m- oder p-Methoxyphenyl,
o-, m- oder p-Ethoxyphenyl,
o-, m- oder p-Propoxyphenyl,
m- oder p-iso-Propoxyphenyl,
o-, m- oder p-Butoxyphenyl,
m- oder p-iso-Butoxyphenyl,
m- oder p-sec-Butoxyphenyl,
m- oder p-tert-Butoxyphenyl,
2,3-, 2,4-, 2,5-, 2,6-, 3,4- oder 3,5-Dimethoxyphenyl,
o-, m- oder p-Hydroxyphenyl,
2,3-, 2,4-, 2,5-, 2,6-, 3,4- oder 3,5-Dihydroxyphenyl,
3-Hydroxy-4-methoxyphenyl,
m- oder p-Phenoxyphenyl, o-, m- oder p-Aminophenyl,
o-, m- oder p-(N-Methylamino)phenyl,
o-, m- oder p-(N,N-Dimethylamino)phenyl,
o-, m- oder p-Fluorphenyl,
o-, m- oder p-Chlorphenyl,
2,4-Dichlorphenyl,
o-, m- oder p-Bromphenyl,
o-, m- oder p-Nitrophenyl,
2,3- oder 3,4-Methylendioxyphenyl,
2-, 3- oder 4-Biphenyl und
α- oder β-Naphthyl.

Besonders bevorzugt sind C₁-C₄-Alkoxyphenylreste, insbesondere solche, in denen der Alkoxyrest in p-Position am Phenylkern steht.

R¹ steht für eine geradkettige oder verzweigte C₁-C₂₀-Alkylgruppe, z. B. Methyl, Ethyl, n-Propyl, iso-Propyl, n-Butyl, iso-Butyl, sec-Butyl, tert-Butyl, n-Pentyl, iso-Pentyl, sec-Pentyl, tert-Pentyl, neo-Pentyl, n-Hexyl, n-Heptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Hexadecyl, n-Octadecyl, n-Eicosyl; oder eine geradkettige oder verzweigte C₂-C₂₀-Alkenylgruppe, z. B. Vinyl, Allyl, Methallyl, Oleyl, Linolyl oder Linolenyl; oder eine C₃-C₈-Cycloalkylgruppe wie Cyclopropyl, Cyclobutyl, Cyclopentyl, Cyclohexyl, Cycloheptyl oder Cyclooctyl. Hiervon sind geradkettige oder verzweigte C₅- bis C₁₆-Alkylgruppen, insbesondere geradkettige oder verzweigte C₈- bis C₁₂-Alkylgruppen, bevorzugt. Von besonderem Interesse sind geradkettige oder verzweigte C₈-Alkylgruppen. Unter den Cycloalkylgruppen sind Cyclopentyl und Cyclohexyl bevorzugt.

Die genannten Gruppen können mit bis zu drei unter Halogen, Cyano, Nitro, Amino, C₁-C₄-Alkylamino, C₁-C₄-Dialkylamino, Hydroxy, C₁-C₄-Alkyl und C₁-C₄-Alkoxy ausgewählten Resten substituiert sein.

Halogen steht beispielsweise für Fluor, Chlor oder Brom.

Die Reste R² und R³ bedeuten unabhängig voneinander insbesondere Wasserstoff, Methyl oder Ethyl. Ganz besonders bevorzugt steht in der allgemeinen Formel I R² für Wasserstoff oder Methyl und R³ für Wasserstoff.

Als 3-Arylacrylsäureester der allgemeinen Formel I ist 2-Ethylhexyl-p-methoxycinnamat besonders bevorzugt.

Die erfindungsgemäße Stabilisatorzusammensetzung enthält als Komponente B) wenigstens ein sterisch gehindertes monomeres Amin der allgemeinen Formel II, 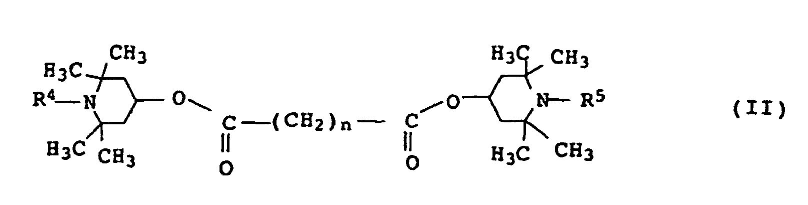 worin
- R⁴ und R⁵: unabhängig voneinander für Wasserstoff, C₁-C₄-Alkyl, C₁-C₁₂-Alkoxy stehen, und
- n: für eine ganze Zahl von 2 bis 10, vorzugsweise 2 bis 8, insbesondere für 8, steht.

R⁴ und R⁵ stehen unabhängig voneinander jeweils für Wasserstoff, eine geradkettige oder verzweigte C₁-C₄-Alkylgruppe, z. B. Methyl, Ethyl, n-Propyl, iso-Propyl, n-Butyl, iso-Butyl, sec-Butyl, tert. Butyl oder für eine geradkettige oder verzweigte C₁-C₁₂-Alkoxygruppe wie Methoxy, Ethoxy, n-Propoxy, iso-Propoxy, n-Butoxy, iso-Butoxy, sec.-Butoxy, tert.-Butoxy, n-Pentyloxy, n-Hexyloxy, iso-Hexyloxy, n-Octyloxy, 2-Ethylhexyloxy, iso-Octyloxy, n-Nonyloxy, n-Decyloxy, n-Undecyloxy und n-Dodecyloxy. Hiervon sind Wasserstoff, Methyl und die isomeren Octyloxygruppen besonders geeignet.

Die als Komponente B) einsetzbaren Verbindungen können flüssig bis kristallin vorliegen. Es eignen sich vor allem Bis-(1,2,2,6,6-pentamethylpiperidin-4-yl)sebacat, das im Handel unter dem Namen Lowilite® 76 der Fa. Great Lakes erhältlich ist, Bis-(2,2,6,6-tetramethylpiperidin-4-yl)sebacat, das im Handel unter dem Namen Lowilite® 77 der Fa. Great Lakes erhältlich ist, Bis-(2,2,6,6-tetramethylpiperidin-4-yl)succinat, das im Handel unter dem Namen Tinuvin® 780 FF der Fa. Ciba-Geigy (jetzt Ciba Speciality Chemicals) erhältlich ist, Bis-(1-octyloxy-2,2,6,6-tetramethylpiperidin-4-yl)sebacat, das im Handel unter dem Namen Tinuvin® 123 der Fa. Ciba-Geigy (jetzt Ciba Speciality Chemicals) erhältlich ist. Vorzugsweise verwendet man sterisch gehinderte monomere Amine, die bei Raumtemperatur oder unterhalb von 100 °C im flüssigen Aggregatzustand vorliegen, wie Bis-(1,2,2,6,6-pentamethylpiperidin-4-yl)sebacat.

Die erfindungsgemäße Stabilisatorzusammensetzung enthält als Komponente C) wenigstens ein Phenol der Formel III, 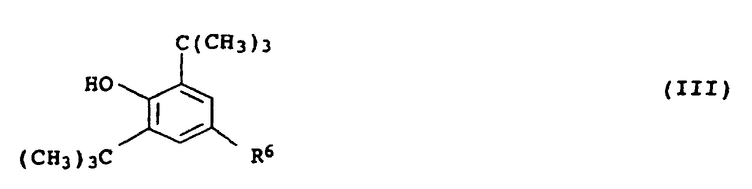 worin
- R⁶: für C₁-C₂₀-Alkoxycarbonyl-C₁-C₆-alkyl, vorzugsweise C₁-C₂₀-Alkoxycarbonyl-C₁-C₄-alkyl steht.

Hierzu eignen sich insbesondere (3,5-Di-tert.-butyl-4-hydroxyphenyl)propionsäureester von C₁-C₂₀-Alkanolen wie 3-(3,5-Di-tert.-butyl-4-hydroxyphenyl)propionsäure-i-octylester, das im Handel unter dem Namen Irganox® 1135 der Fa. Ciba-Geigy (jetzt Ciba Speciality Chemicals) erhältlich ist, oder 3-(3,5-Di-tert.-butyl-4-hydroxyphenyl)propionsäure-n-octadecylester, das im Handel unter dem Namen Irganox® 1076 der Fa. Ciba-Geigy (jetzt Ciba Speciality Chemicals) erhältlich ist.

Die erfindungsgemäße Stabilisatorzusammensetzung enthält als Komponente D) wenigstens ein Chromanderivat der Formel IV, 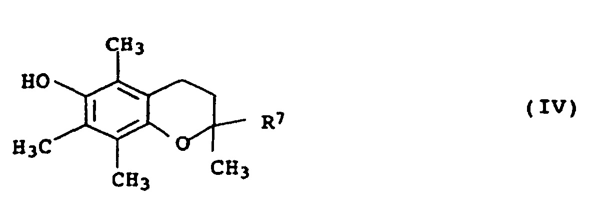 worin R⁷ für eine Gruppe der Formel 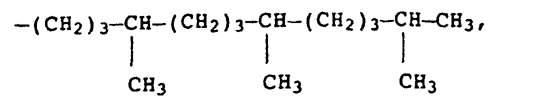 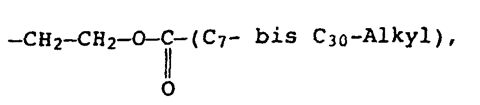 -CH₂CH₂-S-(C₁- bis C₃₀-Alkyl) oder 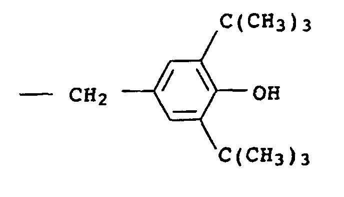 steht.

Hierzu eignen sich vor allem 2,5,7,8-Tetramethyl-2-(2'-stearoyloxy-ethyl)chroman (R⁷= -CH₂CH₂-O-CO-C₁₇H₃₅) und insbesondere α-Tocopherole, vorzugsweise D,L-α-Tocopherol (R⁷ = -(CH₂)₃-CH(CH₃)-(CH₂)₃-CH(CH₃)-(CH₂)₃-C(CH₃)₂).

Die erfindungsgemäße Stabilisatorzusammensetzung enthält als Komponente E) wenigstens ein organisches Phosphit und/oder Phosphonit.

Hierzu sind insbesondere organische Phosphite der allgemeinen Formel V, 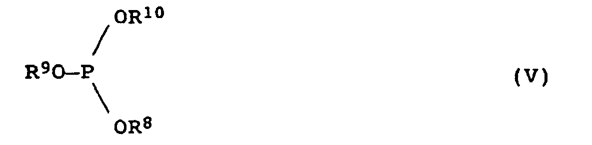 in der die Reste R⁸ bis R¹⁰ jeweils für C₂- bis C₁₂-Alkyl, vorzugsweise C₆- bis C₁₁-Alkyl, insbesondere C₈- bis C₁₀-Alkyl, oder C₆- bis C₁₈-Aryl, vorzugsweise Phenyl, welches durch C₁- bis C₁₈-Alkylgruppen, vorzugsweise ein bis drei C₄bis C₁₂-Alkylgruppen, substituiert sein kann, stehen,
oder ein organisches Phosphonit der Formel VI, 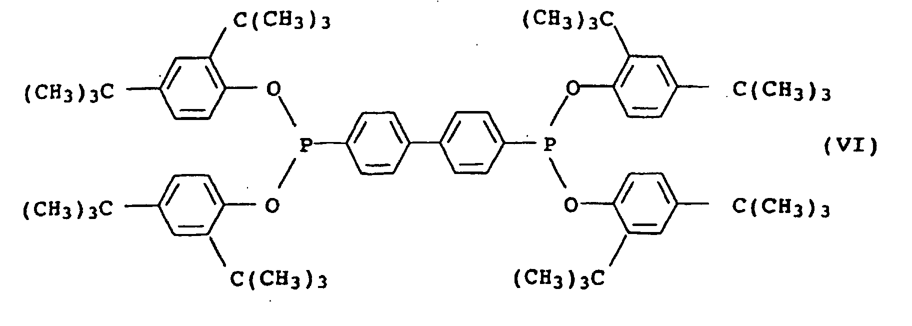 oder Mischungen aus den Phosphiten V und dem Phosphonit VI geeignet.

Die erfindungsgemäß einsetzbaren Phosphite und Phosphonite können sowohl flüssig wie auch kristallin sein. Als Beispiele für Phosphite der Formel V sind zu nennen:
- Trialkylphosphite mit bevorzugt langkettigen linearen oder verzweigten Alkylgruppen wie Octyl-, Nonyl-, Isononyl-, Decyl- oder Isodecylgruppen; vorzugsweise Tris(nonylphenyl)phosphit.
- Triarylphosphite mit unsubstituierten oder ein- bis dreifach alkylsubstituierten Arylgruppen wie Phenyl-, Nonylphenyloder 2,4-Di-tert-butylphenylgruppen;
- gemischte Arylalkylphosphite, wie Diisodecylphenylphosphit oder Diphenylpentaerythritdiphosphit.

Das Phosphonit der Formel VI ist im Handel unter dem Namen Irgafos®P-EPQ der Fa. Ciba-Geigy (jetzt Ciba Speciality Chemicals) erhältlich.

Wahlweise enthält die erfindungsgemäße Stabilisatorzusammensetzung zusätzlich wenigstens einen weiteren Lichtstabilisator, der Lichtstrahlung im UV-A- (320 bis 400 nm) und/oder UV-B-Bereich (280 bis 320 nm) absorbiert. Selbstverständlich müssen die zusätzlichen Lichtstabilisatoren mit der Stabilisatorzusammensetzung kompatibel und vorzugsweise im sichtbaren Bereich farblos sein. Als Beispiele für derartige UV-Absorber seien genannt: 2-Hydroxybenzophenone, 2-Hydroxyphenylbenzotriazole, Oxalsäuredianilide, 2-Hydroxyphenyltriazine, 4,4'-Diarylbutadiene.

Geeignete 2-Hydroxybenzophenone, von denen eine Vielzahl im Handel erhältlich sind, sind beispielsweise: 2-Hydroxy-4-methoxybenzophenon, 2,4-Dihydroxybenzophenon, 2-Hydroxy-4-dodecoxybenzophenon, 2,2'-Dihydroxy-4-methoxybenzophenon (Handelsname Cyasorb® UV 24, American Cyanamid, jetzt Cytec), 2,2'-Dihydroxy-4,4'-dimethoxybenzophenon, 2,2',4,4'-Tetrahydroxybenzophenon. Die 2-Hydroxybenzophenone zeichnen sich durch eine gute UV-Beständigkeit und ein hohes Absorptionsvermögen aus.

Geeignete 2-Hydroxyphenylbenzotriazole sind beispielsweise 2-(2'-Hydroxy-5'-methylphenyl)benzotriazol (Handelsname Tinuvin® P, Ciba-Geigy, jetzt Ciba Speciality Chemicals), 2-(2'-Hydroxy-5'-tert.-octylphenyl)benzotriazol (Handelsname Cyasorb® UV 5411), 2-(2'-Hydroxy-3'-tert.-butyl-5'-methylphenyl)benzotriazol (Handelsname Tinuvin® 326, Ciba-Geigy, jetzt Ciba Speciality Chemicals), 2-(2'-Hydroxy-3',5'-di-tert.-butylphenyl)5-chlorbenzotriazol (Handelsname Tinuvin® 327, Ciba-Geigy, jetzt Ciba Speciality Chemicals). 2-Hydroxyphenylbenzotriazole absorbieren an der Grenze zum sichtbaren Bereich und zeigen keine Gelbfärbung.

Ein geeignetes 2-Hydroxyphenyltriazin ist beispielsweise 2,4-Bis-(2', 2'',4',4''-tetramethylphenyl)-6-(2'''-hydroxy-4'''-octyloxyphenyl)-1,3,5-triazin (Handelsname Cyasorb® 1164, American Cyanamid, jetzt Cytec).

Bevorzugte Oxalsäuredianilide sind beispielsweise: 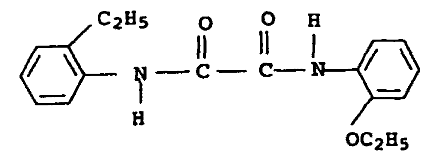 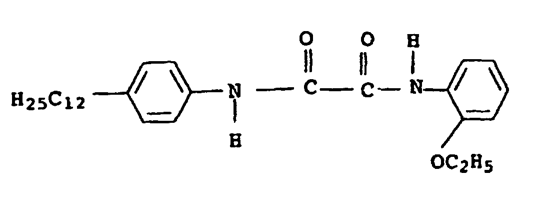 4,4'-Diarylbutadiene der Formel VII 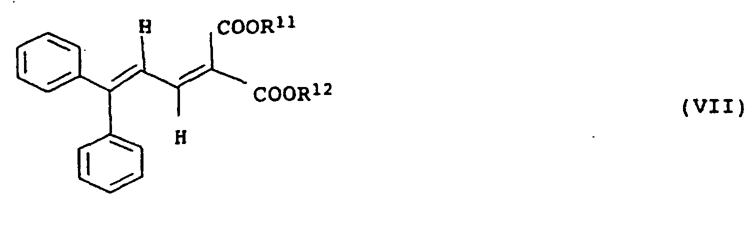 sind aus EPA 916 335 bekannt. Die Substituenten R¹¹ und/oder R¹² bedeuten bevorzugt C₁-C₈-Alkyl und C₅-C₈-Cycloalkyl.

Die erfindungsgemäße Stabilisatorzusammensetzung enthält
35 bis 65 Gewichtsteile, vorzugsweise 37 bis 60 Gewichtsteile A),
10 bis 50 Gewichtsteile, vorzugsweise 15 bis 45 Gewichtsteile B),
5 bis 15 Gewichtsteile, vorzugsweise 7 bis 12 Gewichtsteile C),
0,5 bis 2,5 Gewichtsteile, vorzugsweise 0,7 bis 2,0 Gewichtsteile D) und
5 bis 25 Gewichtsteile, vorzugsweise 7 bis 20 Gewichtsteile E).

Wird ein weiterer Lichtstabilisator mitverwendet, so wird er vorzugsweise in einer Menge von 0,1 bis 15, vorzugsweise 1 bis 12, Gewichtsteilen, bezogen auf das Gesamtgewicht der Stabilisatorzusammensetzung verwendet.

Die erfindungsgemäße Stabilisatorzusammensetzung wird dem zu stabilisierenden organischen Material in der Regel in einer Konzentration von 0,01 bis 5 Gew.-%, vorzugsweise von 0,01 bis 2 Gew.-%, insbesondere von 0,05 bis 1 Gew.-%, bezogen auf das organische Material vor, während oder nach seiner Herstellung zugesetzt.

Unter unbelebtem organischen Material sind beispielsweise kosmetische Präparate, wie Salben und Lotionen, Arzneimittelformulierungen, wie Pillen und Zäpfchen, photographische Aufzeichnungsmaterialien, insbesondere photographische Emulsionen, Vorprodukte für Kunststoffe und Anstrichmittel, insbesondere jedoch Anstrichmittel und Kunststoffe selbst, zu verstehen.

Als Kunststoffe, die durch das erfindungsgemäße Stabilisatorgemisch stabilisiert werden können, seien beispielsweise genannt:
Polymere von Mono- oder Diolefinen, wie z. B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;
Polystyrol sowie Copolymere von Styrol oder α-Methylstyrol mit Dienen und/oder Acrylderivaten, wie z. B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); halogenhaltige Polymere, wie z. B. Polyvinylchlorid, Polyvinylfluorid, Polyvinylidenfluorid sowie deren Copolymere;
Polymere, die sich von α,β-ungesättigten Säuren und deren Derivaten ableiten, wie Polyacrylate, Polymethacrylate, Polyacrylamide und Polyacrylnitrile;
Polymere, die sich von ungesättigten Alkoholen und Aminen bzw. von deren Acylderivaten oder Acetalen ableiten, z. B. Polyvinylalkohol und Polyvinylacetat;
Polyurethane, Polyamide, Polyharnstoffe, Polyphenylenether, Polyester, Polycarbonate, Polysulfone, Polyethersulfone und Polyetherketone.

Zu den Anstrichmitteln, die mit der erfindungsgemäßen Stabilisatorzusammensetzung stabilisiert werden können, zählen unter anderem Lacke, wie Alkydharzlacke, Dispersionslacke, Epoxydharzlacke, Polyurethanlacke, Acrylharzlacke, Cellulosenitratlacke, oder Lasuren, wie Holzschutzlasuren.

Die erfindungsgemäße Stabilisatorzusammensetzung ist besonders geeignet zur Stabilisierung von Polyurethanen, insbesondere thermoplastischen Polyurethanen. Dabei handelt es sich um überwiegend lineare Polyurethane, die, ausgehend von Diisocyanaten, wie 4,4'-Diisocyanato-diphenylmethan, und langkettigen Diolen, wie Polytetrahydrofuran oder Polyesterpolyolen, erhalten werden. Man geht in der Regel von entsprechenden Präpolymeren aus und setzt kurzkettige Diole oder Diamine als Kettenverlängerer ein; die erhaltenen Produkte sind segmentiert aufgebaut, wobei die Weichsegmente z. B. Molmassen von 1 000 bis 3 000 aufweisen und durch die Hartsegmente physikalisch vernetzt sind.

Die erfindungsgemäße Stabilisatorzusammensetzung kann auch in Form eines Masterbatches, der diese beispielsweise in einer Konzentration von 2,5 bis 25 Gew.-% enthält, hergestellt und den zu stabilisierenden Materialien zugesetzt werden.

Die unter Verwendung der erfindungsgemäßen Stabilisatorzusammensetzung stabilisierten Materialien zeigen besondere Qualitätsmerkmale bezüglich Farbänderung und Glanzhaltung gegenüber den mit der Vergleichszusammensetzung stabilisierten Materialien, d. h. ihre Schädigung durch äußere Einflüsse setzt später ein. Glanz und Farbe sollten möglichst während der gesamten Nutzungsdauer konstant bleiben und ihr Verlust bedeutet stets einen Qualitätsverlust. Die erfindungsgemäß stabilisierten Materialien zeichnen sich somit durch eine verlängerte Beanspruchungszeit aus.

Die Erfindung wird durch die folgenden Beispiele näher veranschaulicht.

### I. Beschreibung der Testmethoden

### 1. Bestimmung des Glanzgrades nach Gardner

Die Glanzmessung erfolgte mit einem Reflektometer Gardner Micro-Gloss 60° nach DIN 67530.

### 2. Bestimmung der Farbabweichung

Vor und nach der Bewitterung wurden die CIELAB-Farbunterschiede ΔE für jede Probe aus den Tristimulus-Werten mit Hilfe der Farbabstandsformel berechnet. Die CIE-Tristimulus-Werte X, Y und Z der Proben wurden mit dem Farbmessgerät DataColor, Datacolor, ermittelt.

### II. Beispiele

### Beispiel 1

Es wurde eine Stabilisatorzusammensetzung 1 hergestellt aus:
- 54: Gewichtsteilen 2-Ethylhexyl-p-methoxycinnamat,
- 18: Gewichtsteilen Bis-(1,2,2,6,6-pentamethylpiperidin-4-yl)sebacat,
- 10: Gewichtsteilen 3-(3,5-Di-tert.-butyl-4-hydroxyphenyl)propionsäure-i-octylester und
- 18: Gewichtsteilen eines Gemisches aus 1 Gewichtsteil α-Tocopherol und 10 Gewichtsteilen Tris(nonylphenyl)phosphit.

### Beispiel 2

Es wurde eine Stabilisatorzusammensetzung 2 hergestellt aus:
- 40: Gewichtsteilen 2-Ethylhexyl-p-methoxycinnamat,
- 40: Gewichtsteilen Bis-(1,2,2,6,6-pentamethylpiperidin-4-yl)sebacat,
- 10: Gewichtsteilen 3-(3,5-Di-tert.-butyl-4-hydroxyphenyl)propionsäure-i-octylester und
- 10: Gewichtsteilen eines Gemisches aus 1 Gewichtsteil α-Tocopherol und 10 Gewichtsteilen Tris(nonylphenyl)phosphit.

Als Vergleich diente eine handelsübliche Stabilisatorzusammensetzung der folgenden Zusammensetzung:
- 60: Gewichtsteile 2-Ethylhexyl-p-methoxycinnamat,
- 20: Gewichtsteile Bis(1,2,2,6,6-pentamethylpiperidin-4-yl)sebacat und
- 20: Gewichtsteile eines Gemisches aus 1 Gewichtsteil α-Tocopherol und 10 Gewichtsteilen Tris(nonylphenyl)phosphit.

### III.Prüfung der Stabilisatorwirkung

Der Stabilisator wurde in eine TPU-Reaktion zugegeben, wobei die Muster über einen Gießansatz hergestellt wurden.

In eine Probe wurden 1 Gew.-% der Stabilisatorzusammensetzung nach Beispiel 1, in eine weitere Probe 1 Gew.-% der Stabilisatorzusammensetzung nach Beispiel 2 eingearbeitet. Zum Vergleich diente eine Probe, in die 1 Gew.-% der Stabilisatorzusammensetzung aus dem Vergleichsbeispiel eingearbeitet wurde. Da bei der unstabilisierten Probe unter den Testbedingungen eine rasche Vergilbung auftrat, konnte eine Kontrolle mit der unstabilisierten Probe nicht durchgeführt werden.

Prüfkörper wurden mit einem Schnellbewetterungsgerät des Typs Weather-Ometer® der Firma Atlas Materials Testing Technology B. V., Niederlande, bewittert. In Abhängigkeit von der Bewetterungszeit wurde der Glanzgrad nach Gardner (Tabelle 1) und die Farbänderung (Tabelle 2) ermittelt. Die Ergebnisse sind in den nachstehenden Tabellen 1 und 2 angegeben.

**Tabelle 1:**

| Glanzgrad nach Gardner in Abhängigkeit von der Zeit | | | | |
|---|---|---|---|---|
| | 0 [h] | 500 [h] | 1000 [h] | 1500 [h] |
| Vergleich | 27 | 38 | 40 | 30 |
| Beispiel 1 | 26 | 25 | 35 | 40 |
| Beispiel 2 | 38 | 58 | 58 | n.b. |
| n.b. nicht bestimmt | | | | |

In Bezug auf den Glanzgrad zeigten die mit den erfindungsgemäßen Stabilisatorzusammensetzungen stabilisierten Proben eine besonders gute Glanzwahrung, wobei sich die Stabilisatorzusammensetzung 1 durch eine besonders langanhaltende Wirkung auszeichnet.

**Tabelle 2:**

| Farbabstand ΔE - CIE in Abhängigkeit von der Zeit | | | | | |
|---|---|---|---|---|---|
| | 200 [h] | 400 [h] | 600 [h] | 800 [h] | 1000 [h] |
| Vergleich | 4,3 | 5,4 | 3,9 | 1,1 | 4,6 |
| Beispiel 1 | 4,7 | 6,3 | 4,5 | 1,2 | 4,1 |
| Beispiel 2 | 7,4 | 10,4 | 9,4 | 5,2 | 3,1 |

Wie man Tabelle 2 entnehmen kann, zeigten die mit den erfindungsgemäßen Stabilisatorzusammensetzungen stabilisierten Proben nach Bewetterung über 1000 Stunden eine deutlich geringere Farbänderung als die mit der Vergleichszusammensetzung stabilisierte Probe.

## Patentansprüche

1. Stabilisatorzusammensetzung, umfassend
A) 35 bis 65 Gewichtsteile wenigstens eines 3-Arylacrylsäureesters der allgemeinen Formel I, 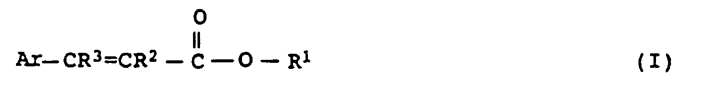 worin
Ar für einen Arylrest steht, welcher zusätzlich 1, 2 oder 3 Substituenten, die unter C₁-C₄-Alkyl, C₁-C₄-Alkoxy, Hydroxy, Phenoxy, Amino, Mono- oder Di(C₁-C₄-alkyl)amino, Halogen oder Nitro ausgewählt sind, oder eine Methylendioxygruppe tragen kann,
R¹ für C₁-C₂₀-Alkyl, C₂-C₂₀-Alkenyl oder C₃-C₈-Cycloalkyl, das gegebenenfalls mit bis zu drei Resten ausgewählt unter Halogen, Cyano, Nitro, Amino, C₁-C₄-Alkylamino, C₁-C₄-Dialkylamino, Hydroxy, C₁-C₄-Alkyl und C₁-C₄-Alkoxy substituiert sein kann, steht, und
R² und R³ für Wasserstoff oder C₁-C₄-Alkyl stehen,
B) 10 bis 50 Gewichtsteile wenigstens eines Amins der allgemeinen Formel II, 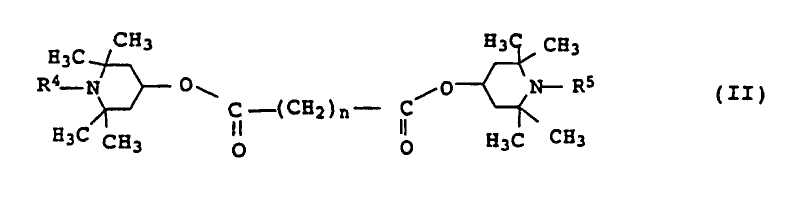 worin
R⁴ und R⁵ unabhängig voneinander für Wasserstoff, C₁-C₄-Alkyl, C₁-C₁₂-Alkoxy stehen und
n für eine ganze Zahl von 2 bis 10 steht,
C) 5 bis 15 Gewichsteile wenigstens eines Phenols der Formel III, 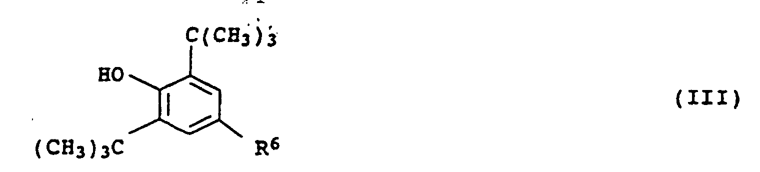 worin
R⁶ für C₁-C₂₀-Alkoxycarbonyl-C₁-C₆-alkyl steht,
D) 0,5 bis 2,5 Gewichtsteile wenigstens eines Chromanderivats der Formel IV, 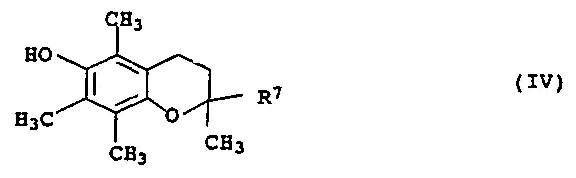 in der R⁷ für eine Gruppe der Formel 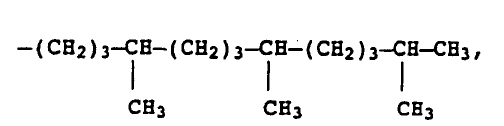 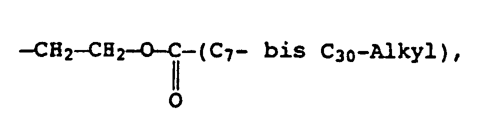 -CH₂CH₂-S-(C₁- bis C₃₀-Alkyl) oder 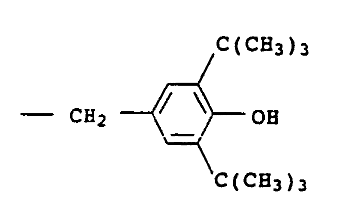 steht, und
E) 5 bis 25 Gewichtsteile wenigstens eines organischen Phosphits und/oder Phosphonits.

2. Stabilisatorzusammensetzung nach Anspruch 1, wobei die Komponente A) 2-Ethylhexyl-p-methoxycinnamat ist.

3. Stabilisatormischung nach Anspruch 1 oder 2, wobei die Komponente B) Bis-(1,2,2,6,6-pentamethylpiperidin-4-yl)sebacat ist.

4. Stabilisatormischung nach einem der vorherigen Ansprüche, wobei es sich bei der Komponente C) um 3-(3,5-Di-tert.-butyl-4-hydroxyphenyl)propionsäure-i-octylester handelt.

5. Stabilisatormischung nach einem der vorherigen Ansprüche, wobei es sich bei der Komponente D) um α-Tocopherol handelt.

6. Stabilisatormischung nach einem der vorherigen Ansprüche, wobei es sich bei der Komponente E) um Tris(nonylphenyl)phosphit handelt.

7. Verwendung der Stabilisatorzusammensetzung nach einem der vorhergehenden Ansprüche zur Stabilisierung von unbelebtem organischen Material gegen die Einwirkung von Licht, Sauerstoff und Wärme.

8. Verwendung nach Anspruch 7 zur Stabilisierung von Kunststoffen.

9. Verwendung nach Anspruch 8 zur Stabilisierung von Polyurethanen, insbesondere thermoplastischen Polyurethanen.

10. Thermoplastische Formmasse, umfassend wenigstens eine Stabilisatorzusammensetzung nach einem der Ansprüche 1 bis 6.

## Claims

1. A stabilizer composition comprising
A) from 35 to 65 parts by weight of at least one 3-arylacrylate of the formula I 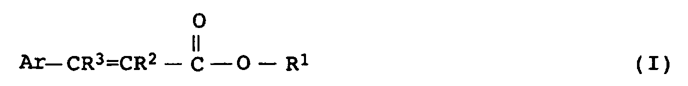 where
Ar is an aryl radical which may also bear 1, 2 or 3 substituents selected from the group consisting of C₁-C₄-alkyl, C₁-C₄-alkoxy, hydroxy, phenoxy, amino, mono- or di(C₁-C₄-alkyl)amino, halogen, or nitro, or may bear a methylenedioxy group,
R¹ is C₁-C₂₀-alkyl, C₂-C₂₀-alkenyl, or C₃-C₈-cycloalkyl, where appropriate substituted by up to three radicals selected from the class consisting of halogen, cyano, nitro, amino, C₁-C₄-alkylamino, C₁-C₄-dialkylamino, hydroxy, C₁-C₄-alkyl, and C₁-C₄-alkoxy, and
R² and R³ are hydrogen or C₁-C₄-alkyl,
B) from 10 to 50 parts by weight of at least one amine of the formula II 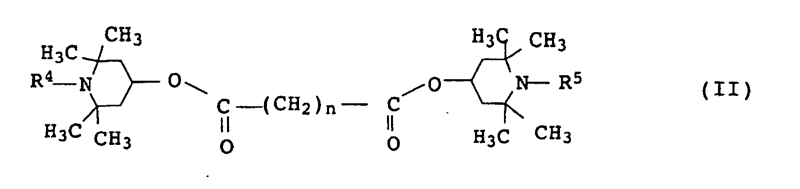 where
R⁴ and R⁵, independently of one another, are hydrogen, C₁-C₄-alkyl, or C₁-C₁₂-alkoxy, and
n is an integer from 2 to 10,
C) from 5 to 15 parts by weight at least one phenol of the formula III 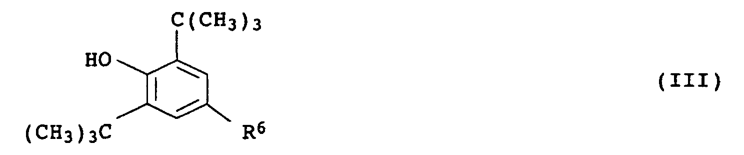 where
R⁶ is C₁-C₂₀-alkoxycarbonyl-C₁-C₆-alkyl,
D) from 0.5 to 2.5 parts by weight at least one chromane derivative of the formula IV 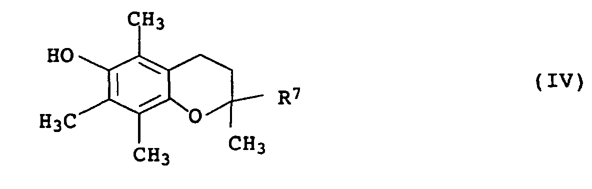 where R⁷ is a group of the formula 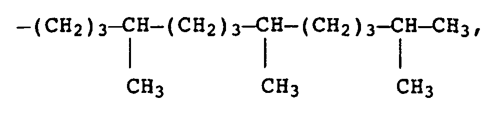 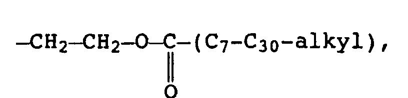 -CH₂CH₂-S-(C₁-C₃₀-alkyl), or 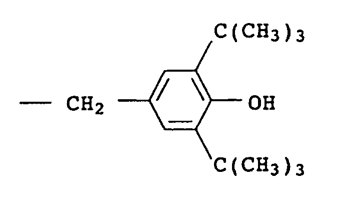 and
E) from 5 to 25 parts by weight of at least one organic phosphite and/or phosphonite.

2. A stabilizer composition as claimed in claim 1, where component A) is 2-ethylhexyl p-methoxycinnamate.

3. A stabilizer mixture as claimed in claim 1 or 2, where component B) is bis-(1,2,2,6,6-pentamethylpiperidin-4-yl) sebacate.

4. A stabilizer mixture as claimed in any of the preceding claims, where component C) is isooctyl 3-(3,5-di-tert-butyl-4-hydroxyphenyl)propionate.

5. A stabilizer mixture as claimed in any of the preceding claims, where component D) is α-tocopherol.

6. A stabilizer mixture as claimed in any of the preceding claims, where component E) is tris(nonylphenyl) phosphite.

7. The use of the stabilizer composition as claimed in any of the preceding claims for stabilizing non-living organic material with respect to exposure to light, oxygen, and heat.

8. The use as claimed in claim 7 for stabilizing plastics.

9. The use as claimed in claim 8 for stabilizing polyurethanes, in particular thermoplastic polyurethanes.

10. A thermoplastic molding composition comprising at least one stabilizer composition as claimed in any of claims 1 to 6.

## Revendications

1. Composition stabilisatrice, comprenant
A) 35 à 65 parties en poids d'au moins un ester d'acide 3-arylacrylique de la formule générale I : 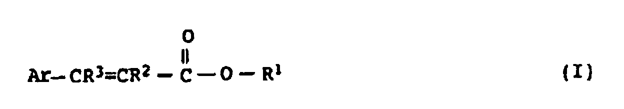 dans laquelle
Ar représente un radical aryle qui peut porter en supplément 1, 2 ou 3 substituants, qui sont choisis parmi les groupes alkyle en C₁-C₄, alcoxy en C₁-C₄, hydroxy, phénoxy, amino, mono- ou di-(C₁-C₄-alkyle) amino, halogène ou nitro, ou un groupe méthylènedioxy,
R¹ représente un groupe alkyle en C₁-C₂₀, alcényle en C₂-C₂₀ ou cycloalkyle en C₃-C₈, qui peut être substitué par jusqu'à trois radicaux choisis parmi de l'halogène et les groupes cyano, nitro, amino, alkylamino en C₁-C₄, dialkylamino en C₁-C₄, hydroxy, alkyle en C₁-C₄ et alcoxy en C₁-C₄, et
R² et R³ représentent de l'hydrogène ou de l'alkyle en C₁-C₄,
B) 10 à 50 parties en poids d'au moins une amine de la formule générale II : 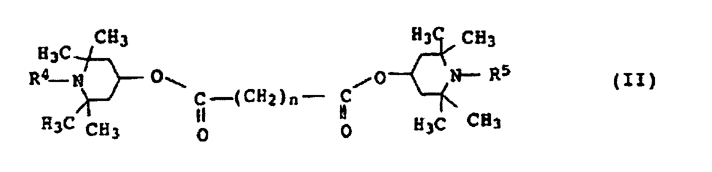 dans laquelle R⁴ et R⁵ représentent, indépendamment l'un de l'autre, de l'hydrogène ou un groupe alkyle en C₁-C₄ ou alcoxy en C₁-C₁₂, et n représente un nombre entier de 2 à 10,
C) 5 à 15 parties en poids d'au moins un phénol de la formule III : 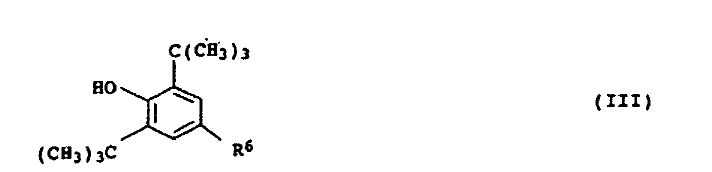 dans laquelle
R⁶ représente du C₁-C₂₀-alcoxycarbonyl-C₁-C₆-alkyle,
D) 0,5 à 2,5 parties en poids d'au moins un dérivé de chromanne de la formule IV : 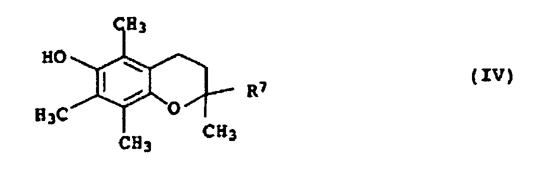 dans laquelle R⁷ représente un groupe de la formule : 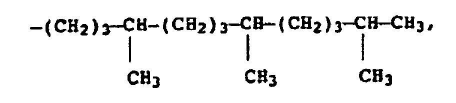 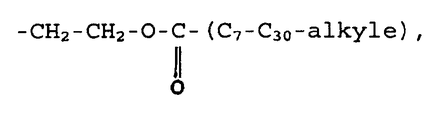 -CH₂-CH₂-S-(C₁-C₃₀-alkyle) ou 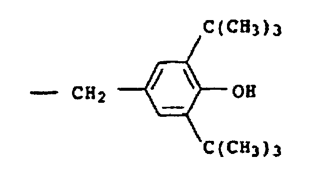 et
E) 5 à 25 parties en poids d'au moins un phosphonite et/ou phosphite organiques.

2. Composition stabilisatrice suivant la revendication 1, dans laquelle le composant A) est du p-méthoxycinnamate de 2-éthylhexyle.

3. Mélange stabilisateur suivant la revendication 1 ou 2, dans lequel le composant B) est du sébaçate de bis-(1,2,2,6,6-pentaméthylpipéridine-4-yle).

4. Mélange stabilisateur suivant l'une des revendications précédentes, dans lequel, pour ce qui concerne le composant C), il s'agit de 3-(3,5-di-tert-butyl-4-hydroxyphényl)propionate de i-octyle.

5. Mélange stabilisateur suivant l'une des revendications précédentes, dans lequel, pour ce qui concerne le composant D), il s'agit d'α-tocophérol.

6. Mélange stabilisateur suivant l'une des revendications précédentes, dans lequel, pour ce qui concerne le composant E), il s'agit de phosphite de tris(nonylphényle).

7. Utilisation de la composition stabilisatrice suivant l'une des revendications précédentes, pour la stabilisation de matières organiques inanimées vis-à-vis de l'action de la lumière, de l'oxygène et de la chaleur.

8. Utilisation suivant la revendication 7, pour la stabilisation de substances synthétiques.

9. Utilisation suivant la revendication 8, pour la stabilisation de polyuréthannes, en particulier de polyuréthannes thermoplastiques.

10. Masse de moulage thermoplastique, comprenant au moins une composition stabilisatrice suivant l'une des revendications 1 à 6.
